# EUROPEAN PATENT APPLICATION

(11) **EP 2 985 438 A1**
(43) Date of publication of application: **17.02.2016**
(21) Application number: 13881488.4
(22) Date of filing: 12.04.2013
(51) Int. Cl.: F02B 39/00, F02B 29/04

(54) **COOLING DEVICE FOR INTERNAL COMBUSTION ENGINE COMPRISING BLOW-BY GAS RECIRCULATION DEVICE AND SUPERCHARGER**

(71) Applicant: TOYOTA JIDOSHA KABUSHIKI KAISHA, Toyota-shi, Aichi-ken, 471-8571 (JP)
(72) Inventor: SHIOTA, Jumpei, Toyota-shi, Aichi-ken, 471-8571 (JP); SUGIYAMA, Matsuyoshi, Toyota-shi, Aichi-ken, 471-8571 (JP); YOEDA, Keiji, Toyota-shi, Aichi-ken, 471-8571 (JP); YAMANE, Naruto, Toyota-shi, Aichi-ken, 471-8571 (JP); SUGIYAMA, Satoshi, Toyota-shi, Aichi-ken, 471-8571 (JP); MATSUMOTO, Isao, Toyota-shi, Aichi-ken, 471-8571 (JP); TABATA, Masakazu, Toyota-shi, Aichi-ken, 471-8571 (JP)
(74) Representative: Smith, Samuel Leonard
(86) International application number: PCT/JP2013/061032
(87) International publication number: WO 2014/167705

(57) **Abstract**

The object of the invention is to provide a cooling device for accomplishing both of required engine and compressor cooling degrees. The invention relates to a cooling device for an engine provided with a blowby gas recirculation device (50) and a turbocharger (60), the blowby gas recirculation device recirculating a blowby gas to an intake passage upstream of a compressor of the turbocharger. The cooling device comprises a first cooling device (70) for cooling a body (20) of the engine and a second cooling device (80) for cooling an intake air, separately. The second cooling device cools the compressor (61).

## Description

### Field of the invention

The present invention relates to a cooling device for an internal combustion engine provided with a blowby gas recirculation device and a turbocharger.

### Background Art

There is known a system for ventilating a crank case by recirculating to an intake passage, a blowby gas leaking from combustion chambers of an internal combustion engine (hereinafter, will be referred to as "the engine") to the crank case. This system is also referred to as a blowby gas recirculation device or a PCV (a Positive Crank case Ventilation).

An oil may be spattered in the crank case due to rotation of a crank shaft at a high speed and blowoff of an in-cylinder gas from between a piston ring and an inner peripheral wall surface defining a cylinder bore and the like. As a result, an oil mist (that is, liquid particles of lubrication oil) is generated in the crank case. In case that the engine has a turbocharger, when the oil mist is recirculated to the intake passage together with the blowby gas by the blowby gas recirculation device, the oil mist flows into a compressor of the turbocharger. On the other hand, a temperature of an intake air discharged from the compressor is increased to a high temperature by a compression of the compressor. Therefore, the oil mist flowing into the compressor is subject to the high temperature. As a result, deposits are generated from the oil mist and accumulate on an impeller and a diffuser wall surface of the compressor. Such an accumulation of the deposits reduces a supercharging efficient of the turbocharger.

Accordingly, in the device described in the Patent Literature 1, the increasing of the temperature of the intake air discharged from the compressor is suppressed by cooling the compressor with a cooling water and thereby, the oil mist is prevented from being subject to the high temperature.

### Citation List

### Patent Literature

**Patent Literature 1:** JP 2010-209846 A

### SUMMARY OF THE INVENTION

### Problem to be solved by the invention

Considered will be a case that an engine cooling water (that is, a water for cooling the engine) is used as the cooling water for cooling the compressor in the device described in the Patent Literature 1. In general, a required compressor cooling degree (that is, a degree for cooling the compressor required for suppressing a generation of the deposits or for maintaining an amount of the generated deposits below a permissible amount, is larger than a required engine cooling degree (that is, a degree for cooling the engine body required for improving an operation of the engine). Therefore, in case that the engine cooling water is used as the cooling water for cooling the compressor, when the temperature of the cooling water is maintained at a temperature for accomplishing the required engine cooling degree, the degree of cooling the compressor is smaller than the required compressor cooling degree and on the other hand, when the temperature of the cooling water is maintained at a temperature for accomplishing the required compressor cooling degree, the degree of cooling a body of the engine is larger than the required engine cooling degree. In this connection, it is preferred that both of the required engine and compressor cooling degrees are accomplished.

Accordingly, an object of the present invention is to provide a cooling device for accomplishing both of the required engine and compressor cooling degrees in the engine provided with the blowby gas recirculation device and the turbocharger.

### Means for solving the problem

The present invention relates to a cooling device for an internal combustion engine provided with a blowby gas recirculation device and a turbocharger, the blowby gas recirculation device recirculating a blowby gas to an intake passage upstream of a compressor of the turbocharger. The cooling device according to the present invention comprises first cooling means for cooling a body of the engine and second cooling means for cooing an intake air, separately. The second cooling means serves to cool the compressor of the turbocharger. Thereby, cooling abilities of the first and second cooling means can be set independently and thus, both of the required engine and compressor cooling degrees can be accomplished.

Further, a required intake air cooling degree (that is, a degree for cooling the intake air required for improving the operation of the engine) is generally equal to the required compressor cooling degree. Accordingly, in the present invention, it is preferred that the second cooling means has single medium cooling means for cooling a cooling medium and cools the intake air and the compressor by the cooling medium cooled by the medium cooling menas. Thereby, both of the required intake air and compressor cooling degrees can be accomplished with a simple control of an operation of the second cooling means.

Strictly, the required compressor cooling degree is smaller than the required intake air cooling degree. Therefore, in the present invention, it is preferred that a flow rate of the cooling medium for cooling the compressor is smaller than a flow rate of the cooling medium for cooling the intake air. Accordingly, in the present invention, in case that the second cooling means has a cooling medium passage in which the cooling medium for cooling the intake air and the compressor flows, it is preferred that the second cooling means has a compressor bypass passage for making a part of the cooing medium bypass the compressor. Thereby, both of the required compressor and intake air cooling degrees can be exactly accomplished.

Further, in order to facilitate the warming of the body of the engine, it is preferred that the intake air having a high temperature is introduced to combustion chambers when a temperature of the body of the engine is low. Therefore, in the present invention, it is preferred that the operation of the second cooling means is stopped when the temperature of the body of the engine is lower than a predetermined temperature. Thereby, when the temperature of the body of the engine is low, the cooling of the intake air is stopped and thus, the intake air having a high temperature is introduced into the combustion chambers. Therefore, when the temperature of the body of the engine is low, the warming of the body of the engine can be facilitated.

Otherwise, in the present invention, it is preferred that the second cooling means has medium cooling means for cooling the cooling medium, a cooling means bypass passage for making at least a part of the cooling medium bypass the medium cooling means and bypass control means for controlling at least a part of the cooling medium to bypass the medium cooling means via the cooling means bypass passage, and the bypass control means makes at least a part of the cooling medium bypass the medium cooling means via the cooling means bypass passage when the temperature of the body of the engine is lower than a predetermined temperature.

Thereby, when the temperature of the body of the engine is low, at least a part of the cooling medium bypasses the medium cooling means and thus, the temperature of the cooling medium can be maintained at a high temperature. Further, a heat transmitted from a turbine of the turbocharger to the compressor may increase the temperature of the cooling medium. In any case, the temperature of the cooling medium can be maintained at a high temperature and thus, the intake air having a high temperature is introduced into the combustion chambers. Therefore, when the temperature of the body of the engine is low, the warming of the body of the engine can be facilitated.

Further, when the temperature of the intake air is low, water included in the intake air may be condensed and a condensed water may be generated. Such a generation of the condensed water is not preferred for the engine. Therefore, in the present invention, it is preferred that the second cooling means has medium cooling means for cooling the cooling medium, a cooing means bypass passage for making at least a part of the cooling medium bypass the medium cooing means and bypass control means for controlling at least a part of the cooling medium to bypass the medium cooling means via the cooling means bypass passage, and the bypass control means makes at least a part of the cooling medium bypass the medium cooling means via the cooling means bypass passage when the temperature of the intake air is lower than a predetermined temperature.

Thereby, when the temperature of the intake air is low, at least a part of the cooling medium bypasses the medium cooling means and thus, the temperature of the cooling medium can be maintained at a high temperature. Further, heat transmitted from the turbine of the turbocharger to the compressor may increase the temperature of the cooling medium. In any case, the temperature of the cooling medium can be maintained at a high temperature. Therefore, the generation of the condensed water in the intake passage can be suppressed.

Further, in case that an exhaust gas is introduced to the intake passage when the temperature of the intake air is low, water included in the exhaust gas is likely to condense and a condensed water is likely to be generated. Therefore, in the present invention, it is preferred that the engine has EGR means for introducing the exhaust gas to the intake passage, the EGR means is configured to introduce the exhaust gas to the intake passage upstream of the compressor and when the temperature of the intake air is lower than a predetermined temperature, the operation of the second cooling means is stopped. Thereby, when the temperature of the intake air is low, the cooling of the intake air is stopped and thus, the temperature of the intake air can be maintained at a high temperature. Therefore, even when the exhaust gas is introduced to the intake passage, the generation of the condensed water can be suppressed.

### BRIEF DESCRIPTION OF THE DRAWINGS

FIG. 1 is a view for showing an internal combustion engine to which a cooling device according to a first embodiment is applied.
FIG. 2 is a view for showing a configuration of the cooling device according to the first embodiment.
FIG. 3 is a view for showing a configuration of a cooling device according to a second embodiment.
FIG. 4 is a view for showing a configuration of a cooling device according to a fourth embodiment.
FIG. 5 is a view for showing a control flow of a compressor bypass control valve according to the fourth embodiment.
FIG. 6 is a view for showing a control flow of a second pump according to a fifth embodiment.
FIG. 7 is a view for showing a configuration of a cooling device according to a sixth embodiment.
FIG. 8 is a view for showing a control flow of a radiator bypass control valve according to the sixth embodiment.
FIG. 9 is a view for showing the engine to which a cooling device according to a seventh embodiment is applied.
FIG. 10 is a view for showing a control flow of a second pump according to the seventh embodiment.
FIG. 11 is a view for showing a control flow of a radiator bypass control valve according to an eighth embodiment.

### MODE FOR CARRYING OUT THE INVENTION

Below, embodiments of a blowby gas recirculation devce according to the present invention will be described with reference to the drawings. An internal combustion engine according to the embodiments described below is a piston-reciprocating type of a compression self-ignition internal combustion engine (so-called diesel engine). The engine has in-line cylinders (for example, four cylinders). However, the present invention can be applied to the other type of the internal combustion engine. Note that the term "deposits" in the following description means deposits derived from an oil mist included in an intake air.

### <First Embodiment>

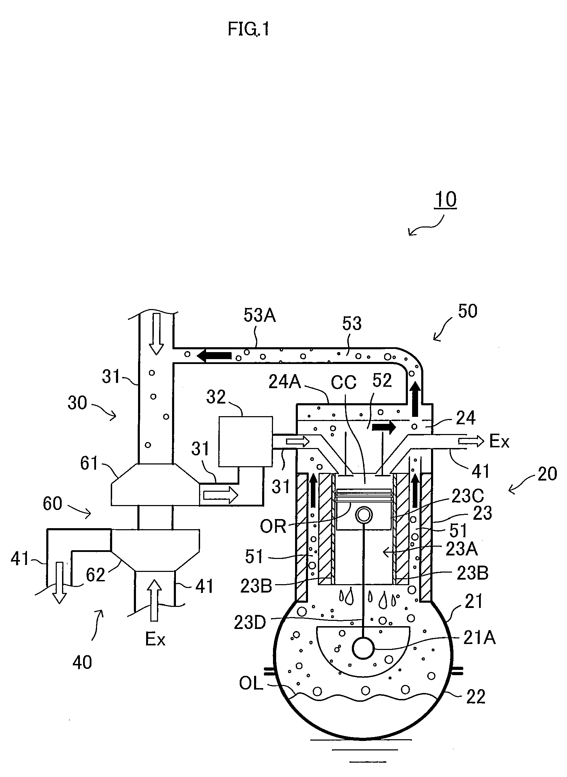

A first embodiment will be described. As shown in FIG. 1, the blowby gas recirculation device according to the first embodiment is applied to the internal combustion engine (hereinafter, will be referred to as "the engine") 10. The engine 10 has an engine body 20, an intake passage 30 and an exhaust passage 40. The engine body 20 has a crank case 21, an oil pan 22, a cylinder block 23 and a cylinder head 24. The crank case 21 supports a crank shaft 21A rotatably. The oil pan 22 is secured to the crank case 21 at a lower side of the crank case 21. The oil pan 22 and the crank case 21 define a space (hereinafter, will be referred to as "the crank case chamber") for housing the crank shaft 21A and reserving a luburication oil OL therein.

The cylinder block 23 is secured to the crank case 21 at an upper side of the crank case 21. The cylinder block 23 is made of aluminum. Further, the cylinder block 23 has cylinder bores 23A (in the first embodiment, four cylinder bores) each having a hollow cylindrical shape. A cast-iron cylinder liner 23B is inserted in the respective cylinder bore 23A such that the liner 23B is in contact with an inner peripheral wall surface defining the cylinder bore 23A. Further, a piston 23C is housed in the respective cylinder bore 23A (in particular, in the respective cylinder liner 23B in the first embodiment)

The piston 23C has a generally cylindrical shape. Further, piston rings are provided on a side wall surface of the respective piston 23C. The lowermost one of the piston rings (that is, the piston ring at the side of the crank case 21) is a so-called oil ring OR. The oil ring OR slides on the inner peripheral wall surface defining the cylinder bore 23A (in particular, the inner peripheral wall surface of the cylinder liner 23B in the first embodiment), thereby to scrape, toward the crank case 21 side, the lubrication oil (in other words, an oil film) adhered to the inner peripheral wall surface defining the cylinder bore 23A. The piston 23C is connected to the crank shaft 21A by a connecting rod 23D. An upper wall surface (that is, a top wall surface) of the piston 23C defines a combustion chamber CC together with the inner peripheral wall surface of the cylinder liner 23B and a lower wall surface of the cylinder head 24.

The cylinder head 24 is secured to the cylinder block 23 at the upper side of the cylinder block 23. Intake ports and exhaust ports are formed in the cylinder head 24. The respective intake port is opened and closed by a respective intake valve. The intake valve is driven by a cam (not shown) of an intake cam shaft (not shown) housed in the cylinder head 24. The respective exhaust port is opened and closed by a respective exhaust valve. The exhaust valve is driven by a cam (not shown) of an exhaust cam shaft (not shown) housed in the cylinder head 24. The cylinder head 24 is covered by a cylinder head cover 24A. Fuel injectors (not shown) are provided on the cylinder head 24.

The intake passage 30 is generally defined by an intake pipe 31, an intercooler 32, a compressor 61 of a turbocharger 60 and the intake ports. The intake pipe 31 is connected to the intake ports. The compressor 61 is interposed in the intake pipe 31. The intercooler 32 is interposed in the intake pipe 31 downstream of the compressor 61.

The exhaust passage 40 is generally defined by the exhaust ports, an exhaust pipe 41 and a turbine 62 of the turbocharger 60. The exhaust pipe 41 is connected to the exhaust ports. The turbine 62 is interposed in the exhaust pipe 41. The turbine 62 is connected to the compressor 61 by a shaft.

The turbine 62 is rotated by energy of an exhaust gas flowing through the turbine 62. The rotation of the turbine 62 is transmitted to the compressor 61 via the shaft. Thereby, the compressor 61 is forced to be rotated. The rotation of the compressor 61 compresses an intake air. In other words, the turbocharger 60 supercharges the intake air.

A blowby gas recirculation device 50 according to the first embodiment has a first gas passage 51, a second gas passage 52 and a third gas passage 53. The first gas passage 51 is formed in the cylinder block 23. The first gas passage 51 connects the crank case chamber to the second gas passage 52 formed in the cylinder head 24. The second gas passage 52 extends in the cylinder head 24 along a predetermined route and is connected to one end of the third gas passage 53. The third gas passage 53 is defined by a gas pipe 53A provided outside of the engine body 20. The other end of the third gas passage 53 is connected to the intake pipe 31 upstream of the compressor 61.

A blowby gas leaking from the combustion chamber CC into the crank case chamber is recirculated to the intake passage 30 through the first, second and third gas passages 51, 52 and 53. Note that a well-known PCV valve may be provided in the third gas passage 53 for controlling an amount of the blowby gas recirculated to the intake passage 30.

### <Cooling Device according to First Embodiment>

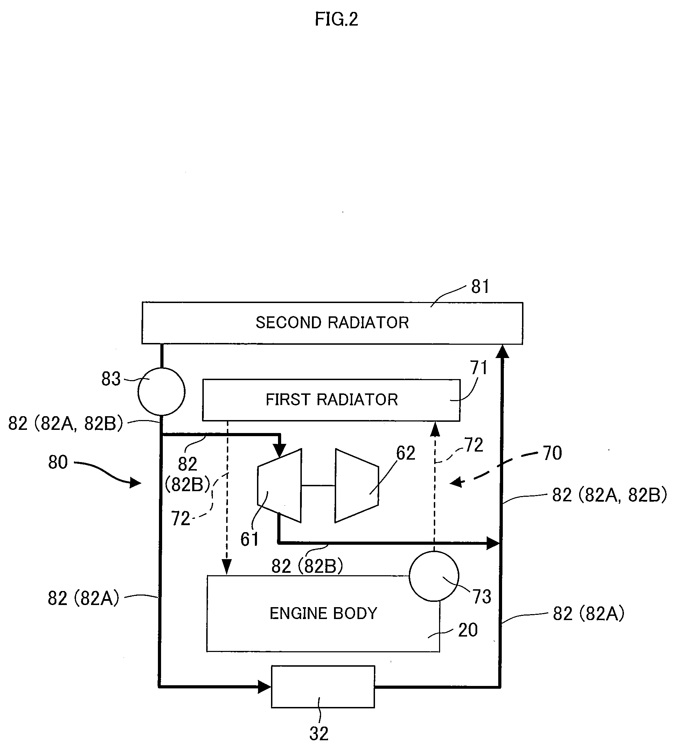

Next, a cooling device according to the first embodiment will be described with reference to FIG. 2. The cooling device has a first cooling device 70 and a second cooling device 80. The first cooling device 70 has a first radiator 71, a first cooling water passage 72 and a first pump 73. On the other hand, the second cooling device 80 has a second radiator 81, a second cooling water passage 82 and a second pump 83.

The first cooling water passage 72 is configured to pass the engine body 20, the first pump 83 and the first radiator 81 in sequence. In other words, the engine body 20, the first pump 72 and the first radiator 71 are interposed in the first cooling water passage 72. When the first pump 73 is operated, a cooling water sequentially circulates in the first radiator 71, the engine body 20 and the first pump 73 through the first cooling water passage 72. At this time, the engine body 20 is cooled by the cooling water and the cooling water is cooled by the first radiator 71.

The second cooling water passage 82 is formed of two cooling water passages 82A and 82B. In other words, after the second cooling water passage 82 exits from the second radiator 81, the second cooling water passage 82 is divided into the cooling water passages 82A and 82B at a position downstream of the second poump 83. Then, the cooling water passage 82A passes the intercooler 32 and the cooling water passage 82B passes the compressor 61. After the cooling water passage 82A passes the intercooler 32 and the cooling water passage 82B passes the compressor 61, these passages 82A and 82B converge and return to the second radiator 81. In other words, the cooling water passage 82A is configured to sequentially circulate in the second pump 83, the intercooler 32 and the second radiator 81. The cooling water passage 82B is configured to sequentially circulate in the second pump 83, the compressor 61 and the second radiator 81. Further, in other words, the second radiator 81 and the second pump 83 are interposed in the cooling water passages 82A and 82B, the intercooler 32 is interposed in the cooling water passage 82A and the compressor 61 is interposed in the cooling water passage 82B. When the second pump 83 is operated, the cooling water sequentially circulates in the intercooler 32 and the compressor 61, the second radiator 81 and the second pump 83 through the second cooling water passage 82. At this time, the intercooler 32 (that is, the intake air) and the compressor 61 are cooled by the cooling water and the cooling water is cooled by the second radiator 81.

### <Cooling Ability of First Cooling Device>

There is an appropriate temperature of the engine body 20 for improving a combustion in the engine body 20. Accordingly, in the first embodiment, set is a required engine cooling degree (that is, a degree of cooling the engine body required for improving the combustion in the engine body 20). The cooling ability of the first cooling device is set to an ability for accomplishing the required engine cooling degree.

### <Cooling Ability of Second Cooling Device>

The crank shaft 21A has a crank journal supported rotatably on the crank case 21, a crank pin, a crank arm and a balance weight. Those crank pin, crank arm and balance weight rotate at a high speed during the operation of the engine (that is, when the engine 10 is operated). Also, the connecting rod 23D moves at a high speed during the operation of the engine. Therefore, the lubrication oil scraped and dropped by the oil ring OR toward the crank case chamber, bumps against members which rotate or move at a high speed (such as the crank pin, the crank arm, the balance weight, the connecting rod 23D and the like) and is spattered. The lubrication oil OL in the oil pan 22 is also spattered by their movements. In addition, the lubrication oil is spattered by a gas in the combustion chamber blowing off from between the piston ring and the cylinder liner 23B. Thereby, a larger amount of the oil mist (droplets of the lubrication oil) is generated in the crank case chamber.

When the blowby gas is introduced to the intake passage 30 by the browby gas recirculation device, the oil mist is also introduced to the intake passage 30. Then, the oil mist flows into the compressor 61. In the compressor 61, the intake air is compressed and thus, the temperature of the intake air is increased. When the temperature of the intake air is increased to a high temperature, the oil mist is subject to the high temperature and becomes deposits. Then, the deposits accumulate in the compressor 61 (in particular, on the impeller and the diffuser wall surface). The accumulated deposits reduces a supercharging efficient of the turbocharger 60.

Accordingly, in the first embodiment, set is a required compressor cooling degree (that is, a degree of cooling the compressor required for maintaining the temperature of the intake air flowing out of the compressor 61 at a temperature for suppressing the generation of the deposits or a temperature for maintaining the generation amount of the deposits below a permissible amount). On the other hand, there is an appropriate temperature of the intake air for improving the combustion in the engine body 20. Accordingly, in the first embodiment, set is a required intake air cooling degree (that is, a degree of cooling the intake air required for improving the combustion in the engine body 20). The cooling ability of the second cooling device 80 is set to an ability for accomplishing the required compressor and intake air cooling degrees.

Note that the required compressor and intake air cooling degrees are larger than the required engine cooling degree, respectively. The temperature for suppressing the generation of the deposits is lower than or equal to a lower limit of a temperature at which the deposits are generated (that is, a temperature at which the deposits begin to be generated). The temperature for maintaining the generation amount of the deposits below the permissible amount is lower than or equal to a lower limit of a temperature at which a predetermined percentage of the oil mist included in the intake air changes to the deposits. For example, the aforementioned predetermined percentage corresponds to a percentage for maintaining the amount of the accumulated deposits (that is, the amount of the deposit accumulating in the compressor) below a permissible amount. For example, the permissible amount corresponds to an upper limit of the amount of the accumulated deposits for maintaining the supercharging efficient of the turbocharger 60 above a desired efficient.

### <Effect derived from First Embodiment>

According to the first embodiment, the first and second cooling devices 70 and 80 are provided, separately and thus, the cooling abilities of the first and second cooling devices 70 and 80 can be separately set, respectively. In addition, the cooling ability of the first cooling device 70 is set to an ability for accomplishing the required engine cooling degree and the cooing ability of the second cooling device 80 is set to an ability for accomplishing the required compressor cooling degree. Therefore, both of the required engine and compressor cooling degrees can be accomplished.

### <Second Embodiment>

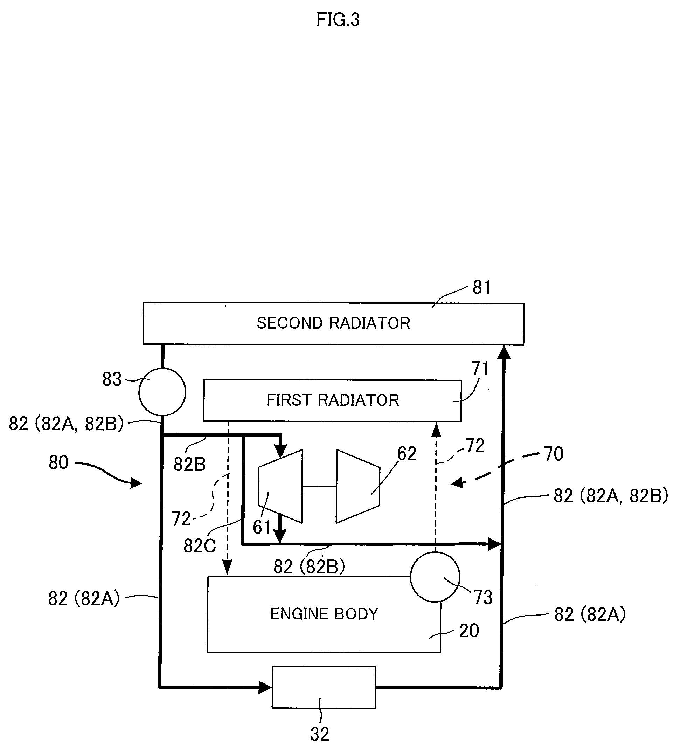

A second embodiment will be described. The engine provided with a cooling device according to the second embodiment corresponds to the engine shown in FIG. 1. The cooling device according to the second embodiment corresponds to the cooling device shown in FIG. 3. The first cooling device 70 according to the second embodiment is the same as the first cooling device 70 according to the first embodiment. The second cooling device 80 according to the second embodiment is the same as the second cooling device 80 according to the first embodiment except that a compressor bypass passage 82C is provided in the second cooling device 80 according to the second embodiment. The compressor bypass passage 82 connects the second cooling water passage 82 (82B) upstream of the compressor 61 directly to the second cooling water passage 82 (82B) downstream of the compressor 61. Therefore, in the second cooling device 80 according to the second embodiment, a part of the cooling water flowing through the second cooling water passage 82 (82B) bypasses the compressor 61 via the compressor bypass passage 82C.

Note that a cooling ability of the second cooling device 80 according to the second embodiment is set to an ability for exactly accomplishing the required intake air cooling degree. In addition, a cross-sectional flow area of the compressor bypass passage 82C is set to an area for supplying to the compressor 61, the cooling water having a flow rate for exactly accomplishing the required compressor cooling degree.

### <Effect derive from Second Embodiment>

An effect derive from the second embodiment will be described. The required compressor cooling degree may be smaller than the required intake air cooling degree. Even in this case, according to the second embodiment, both of the required compressor and intake air cooling degrees can be exactly accomplished.

### <Third Embodiment>

A third embodiment will be described. The engine provided with a cooling device according to the third embodiment corresponds to the engine shown in FIG. 1. The cooling device according to the third embodiment corresponds to the cooling device shown in FIG. 2. The second cooling device 80 according to the third embodiment is the same as the second cooling device 80 according to the first embodiment except that the cross-sectional flow area of the cooling water passage 82B passing the compressor 61 is smaller than the cross-sectional flow area of the cooing water passage 82A passing the intercooler 32.

Note that the cooling ability of the second cooling device 80 according to the third embodiment is set to an ability for exactly accomplishing the required intake air cooling degree. The cross-sectional flow area of the cooling water passage 82B passing the compressor 61 is set to an area for supplying to the compressor 61, the cooling water having a flow rate for exactly accomplishing the required compressor cooling degree.

### <Effect derived from Third Embodiment>

An effect derived from the third embodiment will be described. The required compressor cooling degree may be smaller than the required intake air cooling degree. Even in this case, according to the third embodiment, both of the required compressor and intake air cooling degrees can be exactly accomplished.

### <Fourth Embodiment>

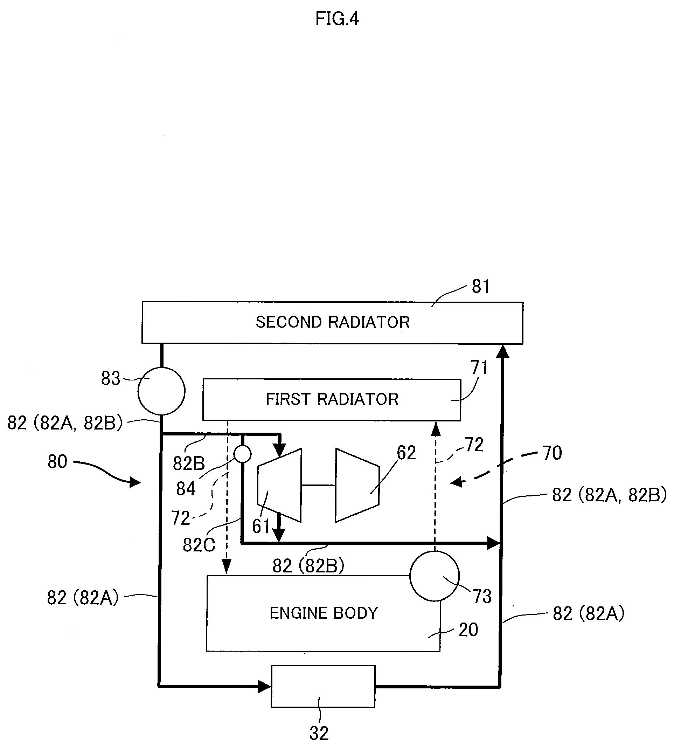

A fourth embodiment will be described. The engine provided with a cooling device according to the fourth embodiment corresponds to the engine shown in FIG. 1. The cooling device according to the fourth embodiment corresponds to the cooling device shown in FIG. 4. The first cooling device 70 according to the fourth embodiment is the same as the first cooling device 70 according to the second embodiment. The second cooling device 80 according to the fourth embodiment is the same as the second cooling device 80 according to the second embodiment except that the second cooling device 80 according to the fourth embodiment has a compressor bypass control valve 84. The compressor bypass control valve 84 is interposed in the compressor bypass passage 82C. The compressor bypass control valve 84 can control a flow rate of the cooling water flowing in the compressor bypass passage 82C.

### <Control according to Fourth Embodiment>

According to the fourth embodiment, an opening degree of the compressor bypass control valve 84 is controlled such that the cooling water having a flow rate for exactly accomplishing the required compressor cooling degree, flows in the compressor bypass passage 82C. In particular, when the degree of cooling the compressor 61 is smaller than the required compressor cooling degree, the opening degree of the compressor bypass control valve 84 is decreased. Thereby, the flow rate of the cooling water flowing in the compressor bypass passage 82C is decreased and thus, the flow rate of the cooling water supplied to the compressor 61 is increased. As a result, the degree of cooling the compressor 61 is increased. On the other hand, when the degree of cooling the compressor 61 is larger than the required compressor cooling degree, the opening degree of the compressor bypass control valve 84 is increased. As a result, the degree of cooling the compressor 61 is decreased.

### <Effect derived from Fourth Embodiment>

An effect derived from the fourth embodiment will be described. The required compressor cooling degree may be smaller than the required intake air cooling degree. In addition, the required compressor cooling degree, the flow rate of the cooling water supplied to the compressor 61 and the cooling ability of the second cooling device 80 may vary. In these cases, according to the fourth embodiment, both of the required compressor and intake air cooling degrees can be exactly accomplished.

### <Control Flow according to Fourth Embodiment>

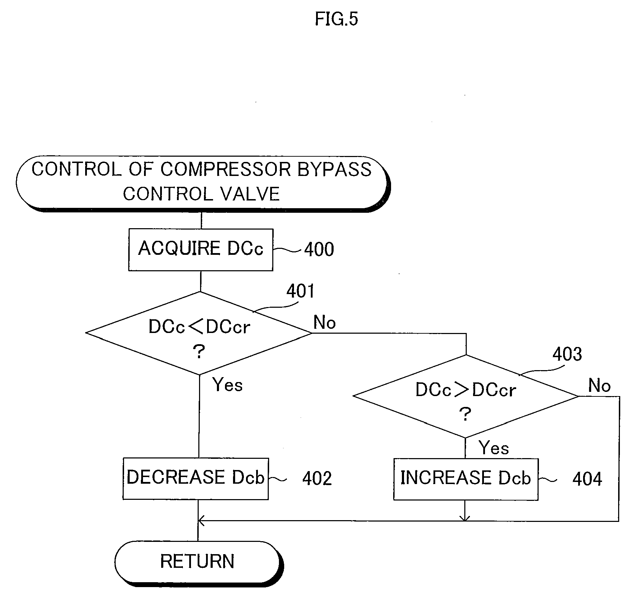

A control flow of the compressor bypass control valve 84 according to the fourth embodiment will be described. This control flow is shown in FIG. 5. When the control flow shown in FIG. 5 starts, at the step 400, the degree DCc of cooling the compressor 61 is acquired. Next, at the step 401, it is determined whether or not the cooling degree DCc acquired at the step 400 is smaller than the required compressor cooling degree DCcr (DCc < DCcr). When it is determined that DCc < DCcr, the routine proceeds to the step 402. On the other hand, when it is not determined that DCc < DCcr, the routine proceeds to the step 403.

At the step 402, the opening degree Dcb of the compressor bypass control valve 84 is decreased and then, the routine ends.

At the step 403, it is determined whether or not the cooling degree DCc acquired at the step 400 is larger than the required compressor cooling degree DCcr (DCc > DCcr). When it is determined that DCc > DCcr, the routine proceeds to the step 404. On the other hand, when it is not determined that DCc > DCcr, the routine ends.

At the step 404, the opening degree Dcb of the compressor bypass control valve 84 is increased and then, the routine ends.

### <Fifth Embodiment>

A fifth embodiment will be described. The engine provided with a cooling device according to the fifth embodiment corresponds to the engine shown in FIG. 1. The cooling device according to the fifth embodiment corresponds to the cooling device shown in FIG. 2. The cooling device according to the fifth embodiment is the same as the cooling device according to the first embodiment except that the operation of the second pump 83 is controlled, depending on an engine temperature (that is, a temperature of the engine body 20).

### <Control according to Fifth Embodiment>

According to the fifth embodiment, when the engine temperature is higher than or equal to a permissible temperature, the second pump 83 is operated. On the other hand, when the engine temperature is lower than the permissible temperature, the operation of the second pump 83 is stopped. Note that the permissible temperature corresponds to a temperature of the engine body 20 required for improving the combustion in the engine body 20.

### <Effect derived from Fifth Embodiment>

An effect derived from the fifth embodiment will be described. According to the fifth embodiment, when the engine temperature is lower than the permissible temperature, the operation of the second pump 83 is stopped and thus, the intake air having a high temperature is introduced to the combustion chambers of the engine body 20. As a result, the engine temperature is increased. In other words, the warming of the engine body 20 is facilitated.

### <Control Flow according to Fifth Embodiment>

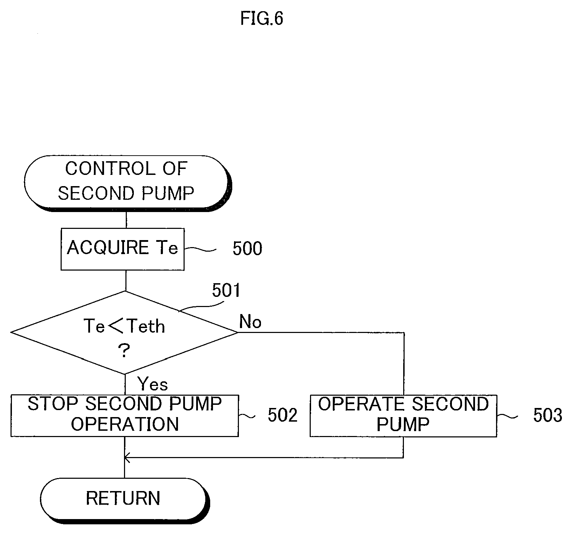

A control flow of the second pump 83 according to the fifth embodiment will be described. This control flow is shown in FIG. 6. When the control flow shown in FIG. 6 starts, at the step 500, the engine temperature Te is acquired. Next, at the step 501, it is determined whether or not the engine temperature Te acquired at the step 500 is lower than the permissible temperature Teth (Te < Teth). When it is determined that Te < Teth, the routine proceeds to the step 502. On the other hand, when it is not determined that Te < Teth, the routine proceeds to the step 503.

At the step 502, the operation of the second pump 83 is stopped and then, the routine ends. On the other hand, at the step 503, the second pump 83 is operated and then, the routine ends.

### <Sixth Embodiment>

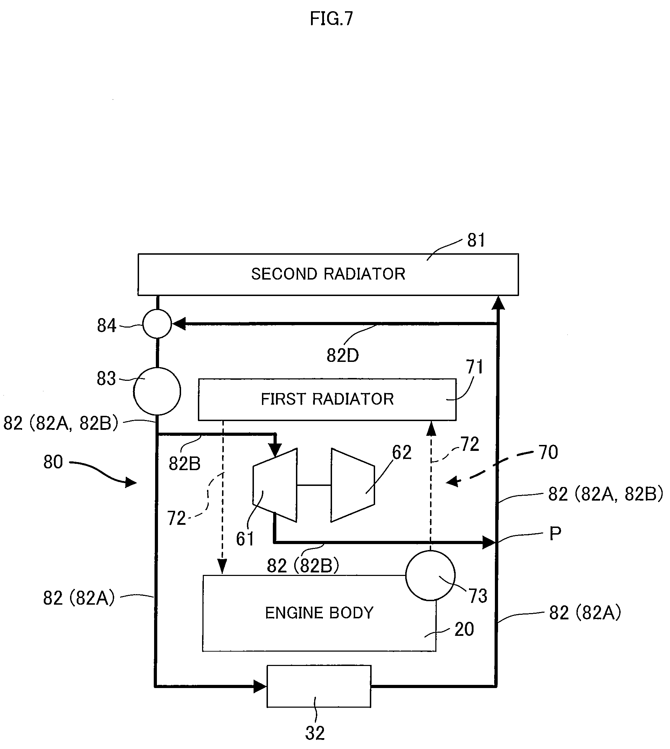

A sixth embodiment will be described. The engine provided with a cooling device according to the sixth embodiment corresponds to the engine shown in FIG. 1. The cooling device according to the sixth embodiment is shown in FIG. 7. The first cooling device 70 according to the sixth embodiment is the same as the first cooling device 70 according to the fifth embodiment. The second cooling device 80 according to the sixth embodiment is the same as the second cooling device 80 according to the fifth embodiment except that the second cooling device 80 according to the sixth embodiment has a radiator bypass passage 82D and a radiator bypass valve 84. The radiator bypass passage 82D connects the second water cooling passage 82 between a position P where the cooing water passages 82A and 82B converge and the second radiator 81 directly to the second cooling water passage 82 between the second radiator 81 and the second pump 83. The radiator bypass valve 84 is interposed in the radiator bypass passage 82D at a position where the radiator bypass passage 82D converges on the second cooling water passage 82. The radiator bypass valve 84 can control the flow rate of the cooling water flowing in the radiator bypass passage 82D.

### <Control according to Sixth Embodiment>

According to the sixth embodiment, when the engine temperature is higher than or equal to the permissible temperature, the operation of the radiator bypass control valve 84 is controlled such that the cooling water does not flow in the radiator bypass passage 82. On the other hand, when the engine temperature is lower than the permissible temperature, the operation of the radiator bypass control valve 84 is controlled such that the cooling water flows in the radiator bypass passage 82D. Note that the permissible temperature corresponds to a temperature of the engine body 20 required for improving the combustion in the engine body 20. Further, when the engine temperature is higher than or equal to the permissible temperature, the second pump 83 is operated and when the engine temperature is lower than the permissible temperature, the second pump 83 is also operated. Furthermore, in case that the operation of the radiator bypass control valve 84 is controlled such that the cooling water flows in the radiator bypass passage 82D, the operation of the radiator bypass control valve 84 may be controlled such that all cooling water flows in the radiator bypass passage 82D or the operation of the radiator bypass control valve 84 may be controlled such that a part of the cooling water flows in the radiator bypass passage 82D. Further, in case that the operation of the radiator bypass control valve 84 is controlled such that the cooling water flows in the radiator bypass passage 82D, the operation of the radiator bypass control valve 84 may be controlled such that the cooling water having a flow rate depending on a difference of the engine temperature with respect to the permissible temperature flows in the radiator bypass passage 82D. In this case, in particular, the operation of the radiator bypass control valve 84 is controlled such that the amount of the cooling water flowing in the radiator bypass passage 82D increases as the difference of the engine temperature with respect to the permissible temperature increases.

### <Effect derived from Sixth Embodiment>

An effect derived from the sixth embodiment will be described. According to the sixth embodiment, when the engine temperature is lower than the permissible temperature, at least a part of the cooling water bypasses the second radiator 81 and thus, the intake air having a high temperature is introduced to the combustion chambers of the engine body 20. As a result, the engine temperature is increased. In other words, the warming of the engine body 20 is facilitated.

### <Control Flow according to Sixth Embodiment>

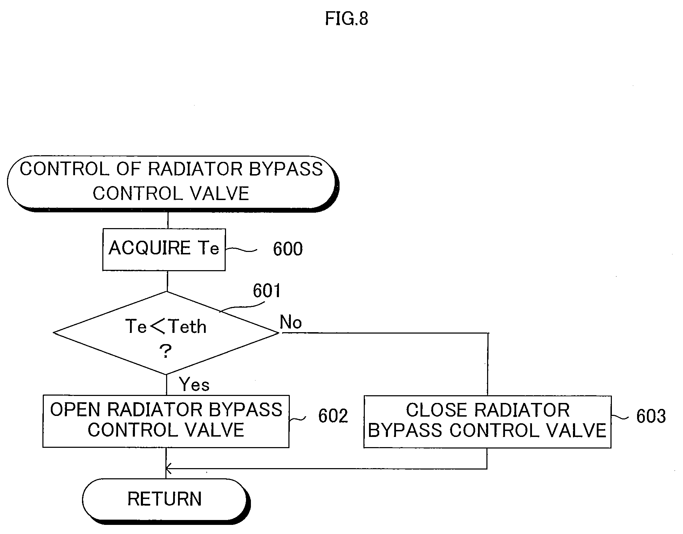

A control flow of the radiator bypass control valve 84 according to the sixth embodiment will be described. This control flow is shown in FIG. 8. When the control flow shown in FIG. 8 starts, at the step 600, the engine temperature Te is acquired. Next, at the step 601, it is determined whether or not the engine temperature Te acquired at the step 600 is lower than the permissible temperature Teth (Te < Teth). When it is determined that Te < Teth, the routine proceeds to the step 602. On the other hand, when it is not determined that Te < Teth, the routine proceeds to the step 603.

At the step 602, the radiator bypass control valve 84 is opened such that the cooling water flows in the radiator bypass passage 82D and then, the routine ends. On the other hand, at the step 603, the radiator bypass control valve 84 is closed such that the cooling water does not flow in the radiator bypass passage 82 and then, the routine ends.

### <Seventh Embodiment>

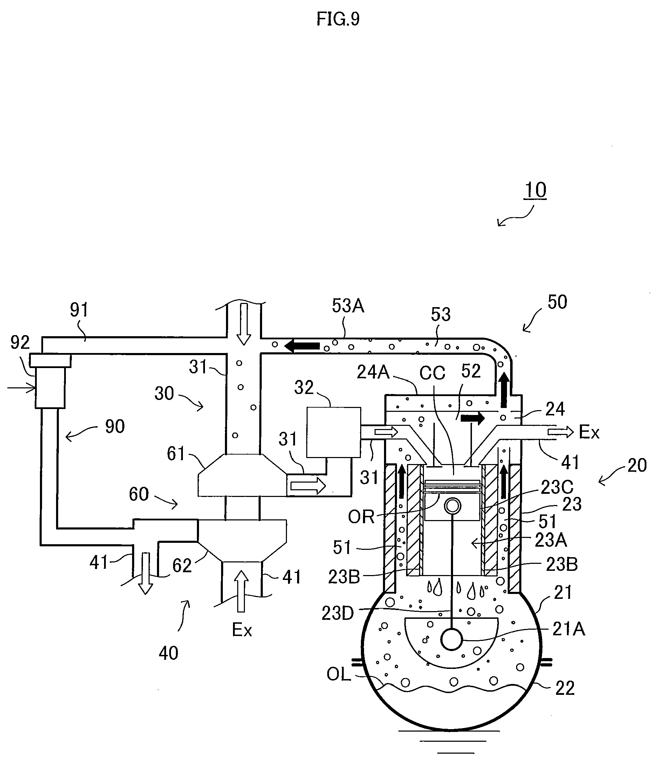

A seventh embodiment will be described. The engine provided with a cooling device according to the seventh embodiment is shown in FIG. 9. The cooling device according to the seventh embodiment corresponds to the cooling device shown in FIG. 2. The engine according to the seventh embodiment is the same as the engine according to the first embodiment except that the engine according to the seventh embodiment has an exhaust gas recirculation device (hereinafter, will be referred to as "the EGR device") 90. The EGR device 90 has an exhaust gas recirculation passage (hereinafter, will be referred to as "the EGR passage") 91 and an exhaust gas recirculation control valve (hereinafter, will be referred to as "the EGR valve") 92. The EGR passage 91 connects the exhaust passage 40 downstream of the turbine 62 directly to the intake passage 30 upstream of the compressor 61. The EGR valve 92 can control a flow rate of an exhaust gas flowing in the EGR passage 91.

### <Control according to Seventh Embodiment>

According to the seventh embodiment, an engine operation condition for introducing the exhaust gas to the intake passage 30 by the EGR device 90 (hereinafter, will be referred to as "the EGR execution condition") is previously determined. When the engine operation state satisfies the EGR execution condition and the intake air temperature is higher than or equal to the permissible temperature, the second pump 83 is operated and an EGR (that is, an introduction of the exhaust gas to the intake passage 30 by the EGR device 90) is executed. On the other hand, when the engine operation state satisfies the EGR execution condition and the intake air temperature is lower than the permissible temperature, the operation of the second pump 83 is stopped and the EGR is executed. Note that the permissible temperature is set to a lower limit of a temperature at which the water included in the exhaust gas introduced to the intake passage 30 (hereinafter, this exhaust gas will be referred to as "the EGR gas") is not condensed even when the intake air is cooled by the second cooling device 80.

### <Effect derive from Seventh Embodiment>

An effect derived from the seventh embodiment will be described. When the exhaust gas is introduced to the intake passage 30 under the state that the intake air temperature is lower than the permissible temperature, the water included in the EGR gas is condensed and a condensed water is generated. Such a generation of the condensed water is not preferred for the engine operation. According to the seventh embodiment, when the engine operation state satisfies the EGR execution condition and the intake air temperature is lower than the permissible temperature, the operation of the second pump 83 is stopped. As a result, the intake air temperature is increased. Therefore, even when the EGR is executed, the generation of the condensed water from the water included in the EGR gas can be suppressed.

### <Control Flow according to Seventh Embodiment>

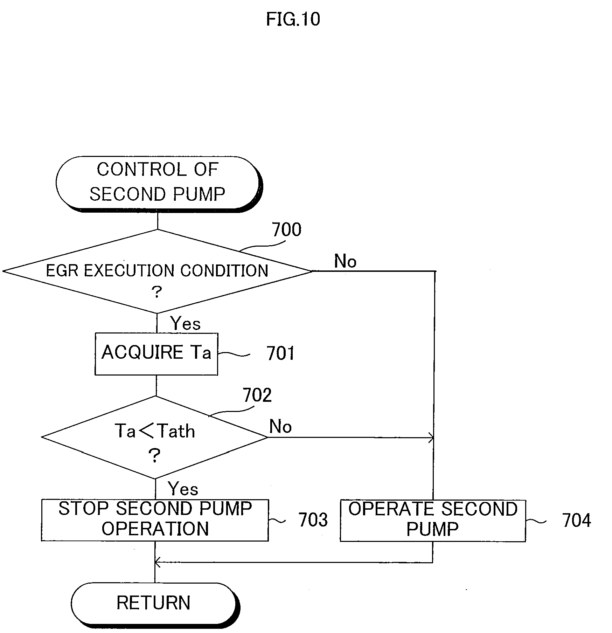

A control flow of the second pump 83 according to the seventh embodiment will be described. This control flow is shown in FIG. 10. When the control flow shown in FIG. 10 starts, at the step 700, it is determined whether or not the engine operation state satisfies the EGR execution condition. When it is determined that the engine operation state satisfies the EGR execution condition, the routine proceeds to the step 701. On the other hand, when it is not determined that the engine operation state satisfies the EGR execution condition, the routine proceeds to the step 704.

At the step 704, the second pump 83 is operated and then, the routine ends.

At the step 701, the intake air temperature Ta is acquired. Next, at the step 702, it is determined whether or not the intake air temperature Ta acquired at the step 701 is lower than the permissible temperature Tath (Ta < Tath). When it is determined that Ta < Tath, the routine proceeds to the step 703. On the other hand, when it is not determined that Ta < Tath, the routine proceeds to the step 704.

At the step 703, the operation of the second pump 83 is stopped and then, the routine ends. On the other hand, at the step 704, the second pump 83 is operated and then, the routine ends.

### <Eighth Embodiment>

An eighth embodiment will be described. The engine provided with a cooling device according to the eighth embodiment corresponds to the engine shown in FIG. 9. The cooling device according to the eighth embodiment corresponds to the cooling device shown in FIG. 7. The cooling device according to the eighth embodiment is the same as the cooling device according to the seventh embodiment except that the cooling device according to the eighth embodiment has a radiator bypass passage 82D and a radiator bypass valve 84.

### <Control according to Eighth Embodiment>

According to the eighth embodiment, when the engine operation state satisfies the EGR execution condition and the intake air temperature is higher than or equal to the permissible temperature, the operation of the radiator bypass control valve 84 is controlled such that the cooling water does not flow in the radiator bypass passage 82D and the EGR is executed. On the other hand, when the engine operation state satisfies the EGR execution condition and the intake air temperature is lower than the permissible temperature, the operation of the radiator bypass control valve 84 is controlled such that the cooling water flows in the radiator bypass passage 82D. Note that the second pump 83 is operated when the intake air temperature is higher than or equal to the permissible temperature and the second pump 83 is also operated when the intake air temperature is lower than the permissible temperature. In case that the operation of the radiator bypass control valve 84 is controlled such that the cooling water flows in the radiator bypass passage 82D, the operation of the radiator bypass control valve 84 may be controlled such that the cooling water having a flow rate depending on a difference of the intake air temperature with respect to the permissible temperature flows in the radiator bypass passage 82D. In this case, in particular, the operation of the radiator bypass control valve 84 is controlled such that the amount of the cooling water flowing in the radiator bypass passage 82D increases as the difference of the intake air temperature with respect to the permissible temperature increases.

### <Effect derived from Eighth Embodiment>

An effect derived from the eighth embodiment will be described. When the exhaust gas is introduced to the intake passage 30 under the state that the intake air temperature is lower than the permissible temperature, the water included in the EGR gas may be condensed and thus, a condensed water may be generated. Such a generation of the condensed water is not preferred for the engine operation. According to the eighth embodiment, when the engine operation state satisfies the EGR execution condition and the intake air temperature is lower than the permissible temperature, at least a part of the cooling water bypasses the second radiator 81. As a result, the intake air temperature is increased. Therefore, even when the EGR is executed, the generation of the condensed water from the water included in the EGR gas can be suppressed.

### <Control Flow according to Eighth Embodiment>

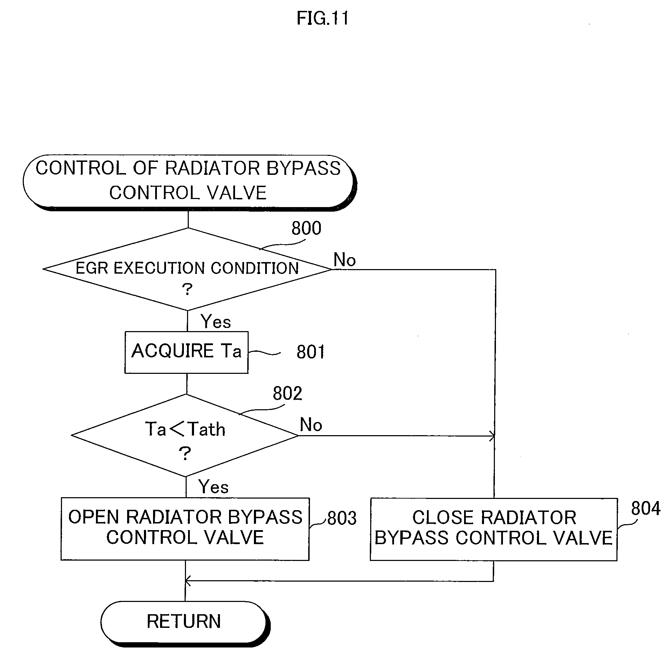

A control flow of the second pump 83 according to the eighth embodiment will be described. This control flow is shown in FIG. 11. When the control flow shown in FIG. 11 starts, at the step 800, it is determined whether or not the engine operation state satisfies the EGR execution condition. When it is determined that the engine operation state satisfies the EGR execution condition, the routine proceeds to the step 801. On the other hand, when it is not determined that the engine operation state satisfies the EGR execution condition, the routine proceeds to the step 804.

At the step 804, the radiator bypass control valve 84 is closed such that the cooling water does not flow in the radiator bypass passage 82 and then, the routine ends.

At the step 801, the intake air temperature Ta is acquired. Next, at the step 802, it is determined whether or not the intake air temperature Ta acquired at the step 801 is lower than the permissible temperature Tath (Ta < Tath). When it is determined that Ta < Tath, the routine proceeds to the step 803. When it is not determined that Ta < Tath, the routine proceeds to the step 804.

At the step 803, the radiator bypass control valve 84 is opened such that the cooling water flows in the radiator bypass passage 82D and then, the routine ends. On the other hand, at the step 804, the radiator bypass control valve 84 is closed such that the cooling water does not flow in the radiator bypass passage 82 and then, the routine ends.

The embodiments described above can be summarized as follows. The invention of the embodiments relates to the cooling device for the engine provided with the blowby gas recirculation device 50 and the turbocharger 60, the blowby gas recirculation device recirculating the blowby gas to the intake passage upstream of the compressor of the turbocharger. The cooling device comprises first cooling means (the first cooling device) 70 for cooling the body 20 of the engine and second cooling means (the second cooling device) 80 for cooling the intake air and the second cooling means also cools the compressor 61.

The second cooling means has single medium cooling means (the second radiator) 81 for cooling a cooling medium (the cooling water) and cools the intake air and the compressor by the cooling medium cooled by the medium cooling means. Further, in case that the second cooling means has a cooling medium passage (the second cooling water passage) 82 in which the cooling medium (the cooling water) for cooling the intake air and the compressor flows, the second cooling means has a compressor bypass passage (the compressor bypass passage 82C or the cooling water passage 82A) for making a part of the cooling medium bypass the compressor.

Further, when the temperature of the body of the engine is lower than a predetermined temperature (the permissible temperature), the operation of the second cooling means is stopped. Otherwise, in case that the second cooling means has medium cooling means (the second radiator) 81 for cooling the cooling medium, cooling means bypass passage (the radiator bypass passage) 82D for making at least a part of the cooling medium bypass the medium cooling means and bypass control means (the radiator bypass control valve) 84 for controlling at least a part of the cooling medium to bypass the medium cooling means via the cooling means bypass passage. When the temperature of the body of the engine is lower than the predetermined temperature (the permissible temperature), the bypass control means makes at least a part of the cooling medium bypass the medium cooling means via the cooling means bypass passage.

Further, in case that the second cooling means has medium cooling means (the second radiator) 81 for cooling a cooling medium (the cooling water), cooling means bypass passage (the radiator bypass passage) 82D for making at least a part of the cooling medium bypass the medium cooling means and bypass control means (the radiator bypass control valve) 84 for controlling at least a part of the cooling medium to bypass the medium cooling means, the bypass control means makes at least a part of the cooling medium bypass the medium cooling means via the cooling means bypass passage when the intake temperature is lower than a predetermined temperature (the permissible temperature).

Further, the engine comprises EGR means (the EGR device) 90 for introducing the exhaust gas to the intake passage. The EGR means is configured to introduce the exhaust gas to the intake passage 30 upstream of the compressor. When the intake air temperature is lower than a predetermined temperature (the permissible temperature), the operation of the second cooling means is stopped.

## Claims

1. A cooling device for an internal combustion engine provided with a blowby gas recirculation device and a turbocharger, the blowby gas recirculation device recirculating a blowby gas to an intake passage upstream of a compressor of the turbocharger,
wherein the cooling device comprises first cooling means for cooling a body of the engine and second cooling means for cooling an intake air, separately, and
the second cooling means cools the compressor.

2. The cooling device as set forth in claim 1, wherein the second cooling means has single medium cooling means for cooling a cooling medium and cools the intake air and the compressor by the cooling medium cooled by the medium cooling means.

3. The cooling device as set forth in claim 1, wherein the second cooling means has a cooling medium passage in which a cooling medium for cooling the intake air and the compressor flows and the second cooling means further has a compressor bypass passage for making a part of the cooling medium bypass the compressor.

4. The cooling device as set forth in claim 1, wherein the operation of the second cooling means is stopped when a temperature of the body of the engine is lower than a predetermined temperature.

5. The cooling device as set forth in claim 1, wherein the second cooling means has medium cooling means for cooling a cooling medium, a cooling means bypass passage for making at least a part of the cooling medium bypass the medium cooling means and bypass control means for controlling whether or not at least a part of the cooling medium is made to bypass the medium cooling means via the cooling means bypass passage, and
the bypass control means makes at least a part of the cooling medium bypass the medium cooling means via the cooling means bypass passage when a temperature of the body of the engine is lower than a predetermined temperature.

6. The cooling device as set forth in claim 1, wherein the second cooling means has:
medium cooling means for cooling a cooling medium;
a cooling means bypass passage for making at least a part of the cooling medium bypass the medium cooling means;
bypass control means for controlling whether or not at least a part of the cooling medium is made to bypass the medium cooling means via the cooling means bypass passage, and
the bypass control means makes at least a part of the cooling medium bypass the medium cooling means via the cooling means bypass passage when a temperature of the intake air is lower than a predetermined temperature.

7. The cooling device as set forth in claim 1 or 6, wherein the engine has EGR means for introducing an exhaust gas to the intake passage,
the EGR means is configured to introduce the exhaust gas to the intake passage upstream of the compressor, and
the operation of the second cooling means is stopped when a temperature of the intake air is lower than a predetermined temperature.
